# EUROPÄISCHE PATENTSCHRIFT

(11) **EP 4 519 725 B1**
(45) Veröffentlichungstag und Bekanntmachung des Hinweises auf die Patenterteilung: **24.06.2026**
(21) Anmeldenummer: 23726277.9
(22) Anmeldetag: 02.05.2023
(51) Int. Cl.: G02B 5/28

(54) **VERFAHREN ZUR BEHANDLUNG EINES OPTISCHEN ABSTANDHALTERS**
METHOD FOR TREATING AN OPTICAL SPACER
PROCÉDÉ DE TRAITEMENT D'UN ESPACEUR OPTIQUE

(30) Priorität: 03.05.2022 DE 102022110797
(43) Veröffentlichungstag der Anmeldung: 12.03.2025
(73) Patentinhaber: Technische Hochschule Wildau, 15745 Wildau (DE)
(72) Erfinder: VILLRINGER, Claus, 10829 Berlin (DE); SCHRADER, Sigurd, 10405 Berlin (DE); LAUFER, Jan, 12161 Berlin (DE)
(74) Vertreter: Heinemeyer, Karsten
(86) Internationale Anmeldenummer: PCT/EP2023/061493
(87) Internationale Veröffentlichungsnummer: WO 2023/217574

(56) Entgegenhaltungen:
- VILLRINGER CLAUS ET AL: "Development of tuneable Fabry-Pérot sensors for parallelised photoacoustic signal acquisition", PROGRESS IN BIOMEDICAL OPTICS AND IMAGING, SPIE - INTERNATIONAL SOCIETY FOR OPTICAL ENGINEERING, BELLINGHAM, WA, US, vol. 10878, 8 March 2019 (2019-03-08), pages 108780M - 108780M, XP060117384, ISSN: 1605-7422, ISBN: 978-1-5106-0027-0, DOI: 10.1117/12.2509437
- BUCHMANN JENS ET AL: "Evaluation of Fabry-Perot polymer film sensors made using hard dielectric mirror deposition", PROGRESS IN BIOMEDICAL OPTICS AND IMAGING, SPIE - INTERNATIONAL SOCIETY FOR OPTICAL ENGINEERING, BELLINGHAM, WA, US, vol. 9708, 15 March 2016 (2016-03-15), pages 970856 - 970856, XP060064700, ISSN: 1605-7422, ISBN: 978-1-5106-0027-0, DOI: 10.1117/12.2234698

## Beschreibung

Die Erfindung betrifft ein Verfahren zur Behandlung eines optischen Abstandshalters für einen Fabry-Perot Resonator.

Es ist bekannt, optische Abstandshalter in Fabry-Perot Resonatoren einzusetzen, um einen Strahl mit einer Resonanzwellenlänge des Fabry-Perot Resonators zu erhalten. Hierfür weist der Fabry-Perot Resonator typischerweise zwei dichroitische Spiegel auf, zwischen denen der optische Abstandshalter liegt. Fabry-Perot Resonatoren haben dabei im Transmissionsspektrum strukturbedingte regelmäßige Resonanzwellenlängen, zwischen denen jeweils der sogenannte freie Spektralbereich liegt, dessen spektrale Anteile durch den Fabry-Perot Resonator herausgefiltert werden. Um hierbei nur mit einer Resonanzwellenlänge des Fabry-Perot Resonators weiterzuarbeiten, ist bekannt, einen Bandpassfilter, insbesondere einen verstellbaren Bandpassfilter, einzusetzen, durch den lediglich Licht im Bereich einer der Resonanzwellenlängen des Fabry-Perot Resonators hindurchtritt.

Weiterhin ist bekannt, dass durch eine Temperaturänderung des optischen Abstandshalters und eine dadurch ausgelöste Veränderung der optischen Dicke des Abstandshalters die Resonanzwellenlänge des Fabry-Perot Resonators verändert werden kann. Da hierbei jedoch die Position der Resonanzwellenlänge im Transmissionsspektrum und deren Bandbreite stark von der ortsabhängigen optischen Dicke des Abstandshalters abhängen, ist eine besonders homogene optische Dicke des optischen Abstandshalters für praktische Anwendungen eines derart einstellbaren Fabry-Perot Resonators notwendig, insbesondere um eine geringe Bandbreite zu ermöglichen.

Ausgehend von dieser Erkenntnis wurde beispielsweise in "Development of tuneable Fabry-Perot sensors for parallelised photoacoustic signal acquisition" (Villinger et al.; Proc. Of SPIE Vol. 10878; doi: 10.1117/12.2509437) ein Verfahren vorgestellt, bei dem ein Photopolymer als optischer Abstandshalter verwendet wird. Photopolymere, wie beispielsweise in diesem Fall das Photopolymer Poly(vinyl cinnamat) (PVCi), können die Eigenschaft haben, dass sie bei Bestrahlung mit kurzwelligem Licht, also insbesondere mit Licht im UV-Bereich, ihren Brechungsindex dauerhaft verändern und mithin ihre optische Dicke durch Bestrahlung mit solchem Licht veränderlich ist. In dem genannten Dokument wird beschrieben, dass räumlich aufgelöst die optische Dicke eines entsprechenden optischen Abstandshalters vermessen wird um anschließend mit kurzwelligem Licht die Dicke zu verändern und dadurch zu homogenisieren.

Aufgabe der vorliegenden Erfindung ist es, ein verbessertes Bearbeiten, insbesondere ein schnelles Bearbeiten, vorzugsweise ein schnelles Homogenisieren, des optischen Abstandshalters zu ermöglichen.

Gemäß der Erfindung wird zur Lösung dieser Aufgabe ein Verfahren gemäß dem unabhängigen Anspruch 1 vorgeschlagen. evorzugte Ausführungsbeispiele sind in den abhängigen Ansprüchen definiert.

Die Erfindung soll nun anhand von in den Figuren schematisch dargestellten, vorteilhaften Ausführungsbeispielen näher erläutert werden. Von diesen zeigen im Einzelnen:
- Fig. 1: zeigt ein Flussdiagramm eines Ausführungsbeispiels eines Verfahrens gemäß einem ersten Aspekt der Erfindung;
- Fig. 2: zeigt ein nicht erfindungsgemäßes System zur Durchführung des Verfahrens gemäß dem ersten Aspekt der Erfindung;
- Fig. 3: zeigt eine schematische Darstellung eines nicht erfindungsgemäßenAusführungsbeispiels einer Verwendung eines homogenisierten optischen Abstandshalters gemäß einem dritten Aspekt in einem Fabry-Perot Resonator;
- Fig. 4: zeigt ein Diagramm mit einem Transmissionsspektrum eines Fabry-Perot Resonators mit einem homogenisierten optischen Abstandshalter gemäß einem zweiten**,** nicht erfindungsgemäßen**.**
- Fig. 5: zeigt eine schematische Darstellung eines Ausführungsbeispiels einer Verwendung eines homogenisierten optischen Abstandshalters gemäß einem vierten**,** nicht erfindungsgemäßen, Aspekt in einer spektralen Kamera; und
- Figs. 6 a,: b zeigen eine schematische Darstellung eines nicht erfindungsgemäßen Ausführungsbeispiels einer Heizelektrode gemäß einem weiteren Aspekt in einer Seitenansicht (Fig. 6 a) und einer Draufsicht (Fig. 6 b).

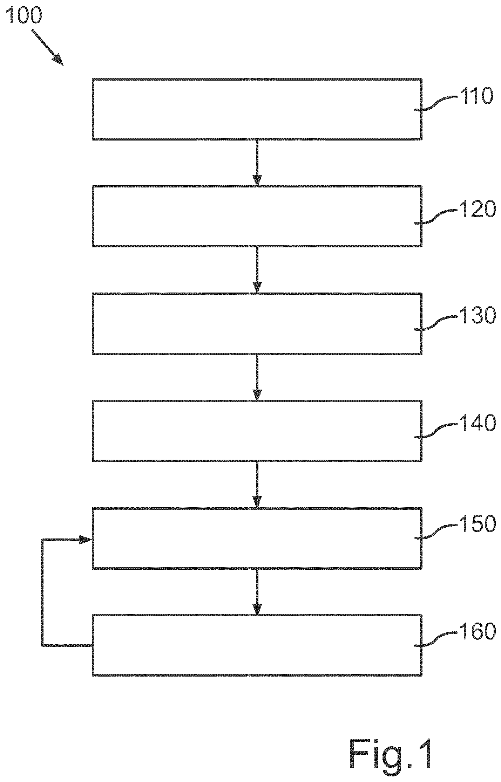

Fig. 1 zeigt ein Flussdiagramm eines Ausführungsbeispiels eines Verfahrens 100 gemäß einem ersten Aspekt der Erfindung.

Das Verfahren 100 ist ausgebildet zur Behandlung eines optischen Abstandshalters für einen Fabry-Perot Resonator. Dabei weist das Verfahren die im Folgenden erläuterten Schritte auf.

Ein erster Schritt 110 umfasst ein Anordnen des optischen Abstandshalters, welcher zumindest teilweise aus einem Photopolymer besteht, in einem Fabry-Perot Resonator, so dass der Fabry-Perot Resonator zwei durch den optischen Abstandshalter voneinander getrennte dichroitische Spiegel umfasst.

Ein nächster Schritt 120 umfasst ein Anordnen des Fabry-Perot Resonators in einem optischen System.

Ein darauffolgender Schritt 130 umfasst ein Ausrichten eines räumlich modulierten Behandlungsstrahls auf den Fabry-Perot Resonator, wobei der räumlich modulierte Behandlungsstrahl Licht aus einem kurzwelligen Bereich aufweist, wobei das Licht aus dem kurzwelligen Bereich geeignet ist, eine Brechungsindexänderung des optischen Abstandshalters zu verursachen.

Ein weiterer Schritt 140 umfasst ein Ausrichten eines Prüfstrahls, insbesondere eines optisch aufgeweiteten Prüfstrahls, auf den Fabry-Perot Resonator.

Ein nächster Schritt 150 umfasst ein räumlich aufgelöstes Detektieren eines reflektierten oder transmittierten Anteils des auf den Fabry-Perot Resonator ausgerichteten Prüfstrahls, wobei der reflektierte oder transmittierte Anteil ortsabhängige Resonanzwellenlängen des Fabry-Perot Resonators indiziert.

Ein abschließender Schritt 160 umfasst ein räumlich aufgelöstes Anpassen einer ortsabhängigen Bestrahlungsstärke des räumlich modulierten Behandlungsstrahls basierend auf dem detektierten reflektierten oder transmittierten Anteil derart, dass durch die verursachte Brechungsindexänderung eine Varianz von indizierten ortabhängigen Resonanzwellenlängen des Fabry-Perot Resonators reduziert wird.

Die Schritte 130 und 140 können in einer beliebigen Reihenfolge ausgeführt werden.

Vorzugsweise wird das Detektieren gemäß Schritt 150 wiederholt ausgeführt, insbesondere in regelmäßigen zeitlichen Abständen ausgeführt. Besonders bevorzugt wird nach dem Anpassen der Bestrahlungsstärke gemäß Schritt 160 wieder der reflektierte oder transmittierte Anteil gemäß Schritt 150 detektiert, um abhängig davon wieder die ortsabhängige Bestrahlungsstärke anzupassen.

Besonders bevorzugt wird ein Wechsel zwischen den Schritten 150 und 160 so oft wiederholt, bis ein vorbestimmter Schwellenwert für die Varianz von indizierten ortabhängigen Resonanzwellenlängen des Fabry-Perot Resonators zumindest in einem relevanten Behandlungsbereich des optischen Abstandshalters erreicht wird. Dies bedeutet, dass das Verfahren 100 vorzugsweise erst beendet wird, wenn die ortsabhängigen Resonanzwellenlängen zumindest im relevanten Bereich des optischen Abstandshalters, also beispielsweise nahe an der zu verwendenden optischen Achse eine geringe Varianz haben. In diesem Sinne ist es das Ziel des erfindungsgemäßen Verfahrens 100, die optische Dicke des optischen Abstandshalters zu homogenisieren. Typische Herstellungsschwankungen der optischen Dicke sind derart groß, dass für im Folgenden erläuterte Anwendungen des optischen Abstandshalters eine homogenere optische Dicke sicherzustellen ist, was durch das Verfahren 100 besonders vorteilhaft ermöglicht wird.

So werden in einer Variante des dargestellten Ausführungsbeispiels die beiden Schritte 150 und 160 automatisiert ausgeführt, beispielsweise basierend auf einem Computerprogramm mit einem Programmcode zur Durchführung von den Schritten 150 und 160. Eine derartige automatisierte Ausführung erlaubt eine besonders kurze Behandlungsdauer des optischen Abstandshalters.

Die Anpassung der ortsabhängigen Bestrahlungsstärke kann dabei auf verschiedene Arten durchgeführt werden. Für eine Homogenisierung ist eine Referenzresonanzwellenlänge erforderlich. Diese Referenzresonanzwellenlänge kann eine vorbestimmte Wellenlänge sein oder es kann eine im Verfahren bestimmte Resonanzwellenlänge als Referenzresonanzwellenlänge verwendet werden. In einer bevorzugten Variante wird eine kleinste indizierte Resonanzwellenlänge des Fabry-Perot Resonators bestimmt und die ortsabhängige Bestrahlungsstärke derart gewählt, dass eine durch den räumlich modulierten Behandlungsstrahl verursachte Brechungsindexänderung eine Reduzierung der jeweiligen ortsabhängigen Resonanzwellenlänge im Wesentlichen hin zu der kleinsten indizierten Resonanzwellenlänge verursacht. Hierdurch kann besonders schnell, also nach wenigen Iterationen der Schritte 150 und 160, ein ausreichend homogenisierter optischer Abstandshalter bereitgestellt werden.

Grundsätzlich kann neben der Bestrahlungsstärke erfindungsgemäß auch eine Bestrahlungsdauer des räumlich modulierten Behandlungsstrahls basierend auf dem detektierten reflektierten oder transmittierten Anteil angepasst werden. Hierdurch können beispielsweise besonders hohe Bestrahlungsstärken vermieden werden.

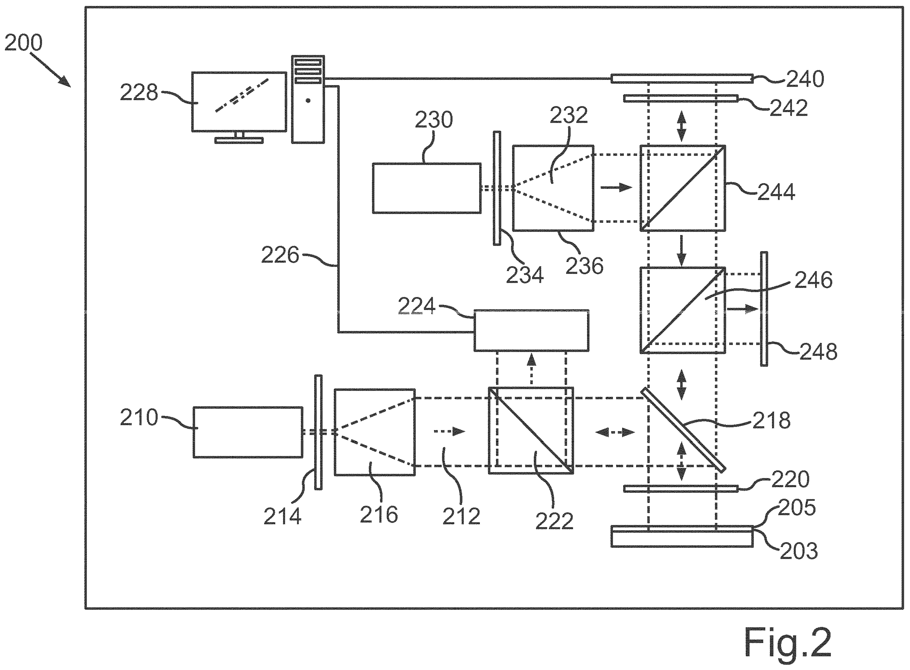

Fig. 2 zeigt ein nicht erfindungsgemäßes System 200 zur Durchführung des Verfahrens gemäß dem ersten Aspekt der Erfindung.

Der Aufbau dieses Systems 200 ist beispielhaft. Wie für den Fachmann auf dem Gebiet der Optik leicht ersichtlich ist, kann das erfindungsgemäße Verfahren auch durch Aufbauten, die sich deutlich von dem in Fig. 2 gezeigten Aufbau unterscheiden ausgeführt werden.

Das System 200 umfasst einen Fabry-Perot Resonator 205 mit dem optischen Abstandshalter 203, der Laserlicht eines Prüflasers 210 teilweise reflektiert. Das Laserlicht bildet den Prüfstrahl 212 im Sinne der vorliegenden Erfindung und ist als gestrichelter Pfeil innerhalb des optischen Systems 200 dargestellt. Der Prüfstrahl 212 passiert nach dem Verlassen des Prüflasers 210 einen Polarisator 214 und einen Strahlaufweiter 216. Vor dem Fabry-Perot Resonator 205 wird der Prüfstrahl 212 durch einen dichroitischen Spiegel 218 in Richtung der optischen Achse des Fabry-Perot Resonators 205 ausgerichtet und passiert ein Lambda/4-Plättchen 220. Der Anteil des daraufhin reflektierten Lichts des Prüfstrahls 212 wird über den dichroitischen Spiegel 218 und einen polarisierenden Strahlteiler 222 zu einer Kamera 224 geführt, die ein entsprechendes Detektionssignal 226 an einen Computer 228 sendet. Der Computer 228 bildet hierbei eine zentrale Steuereinheit des Systems 200.

Der Behandlungsstrahl 232 wird von einem Behandlungslaser 230 bereitgestellt und ist als durchgezogener Pfeil innerhalb des optischen Systems dargestellt. Hierbei passiert der Behandlungsstrahl 232 nach dem Verlassen des Behandlungslasers 230 wiederum einen Polarisator 234 und einen Strahlaufweiter 236. Der aufgeweitete Behandlungsstrahl 232 wird nun über einen Lichtmodulator 240 zur räumlichen Lichtmodulation in seiner ortabhängigen Bestrahlungsstärke moduliert. Hierfür ist der Lichtmodulator 240 mit dem Computer 228 signaltechnisch verbunden. Dadurch kann der Computer 228 beim Steuern der ortsabhängigen Bestrahlungsstärke den reflektrierten Anteil des Prüfstrahls 212 und dadurch vor allem die Verteilung der ortsabhängigen Resonanzwellenlängen des Fabry-Perot Resonators 205 berücksichtigen. Der Behandlungsstrahl 232 besteht vorzugsweise aus Licht mit einer Wellenlänge von weniger als 450 nm, insbesondere von weniger als 420 nm. Derartiges Licht, insbesondere ultraviolettes Licht, ist besonders geeignet, die optische Dicke des optischen Abstandshalters, bei dem es sich erfindungsgemäß um ein Photopolymer handelt, zu verändern.

Nach dem räumlichen Modulieren durch den Lichtmodulator 240 passiert der modulierte Behandlungsstrahl 232 wiederum einen Polarisator 242 und zwei polarisierende Strahlteiler 244, 246, eher der gleiche dichroitische Spiegel 218 wie bereits beim Strahlengang des Prüfstrahls 212 passiert wird, um nach dem Lambda/4-Plättchen 220 auf den Fabry-Perot Resonator 205 mit dem optischen Abstandshalter 203 zu treffen.

Durch den dichroitischen Spiegel 218 wird mithin ein gleichzeitiges Bestrahlen des optischen Abstandshalters 203 durch den Prüfstrahl 212 und den Behandlungsstrahl 232 ermöglicht. Interferenzen zwischen beiden Strahlen können durch die entsprechend bereitgestellten Polarisationen vermieden werden. Der von dem Fabry-Perot Resonator reflektierte Anteil des Behandlungsstrahls 232 wird über das System aus polarisierenden Strahlteilern und einem Absorber 248 aus dem optischen System entfernt, damit der optische Abstandshalter 203 tatsächlich nur durch den aktuell modulierten Behandlungsstrahl 232 behandelt wird. Hierdurch kann die Genauigkeit der zu erzielenden Homogenität des optischen Abstandshalters erhöht werden, also die Varianz von ortsabhängigen Resonanzwellenlängen des Fabry-Perot Resonators reduziert werden.

Die beiden Laser 210, 230 müssen während der Ausführung des erfindungsgemäßen Verfahrens nicht in ihrer Ausrichtung oder in dem bereitgestellten Laserlicht verändert werden. Die erfindungsgemäße Veränderung bei der Behandlung des optischen Abstandshalters 203 findet lediglich über den Lichtmodulator 240 statt.

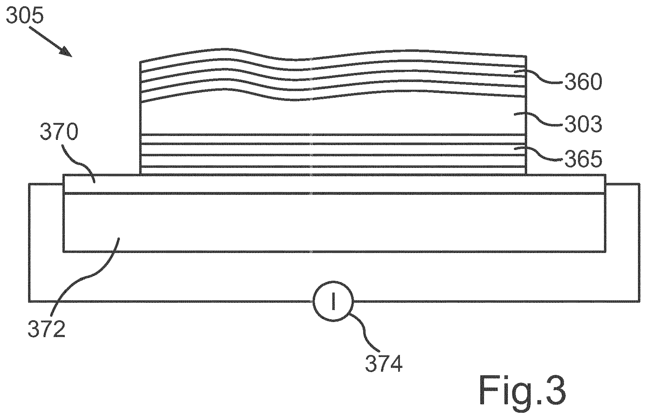

Fig. 3 zeigt eine schematische Darstellung eines nicht erfindungsgemäßen Ausführungsbeispiels einer Verwendung eines homogenisierten optischen Abstandshalters 303 gemäß einem dritten Aspekt in einem Fabry-Perot Resonator 305.

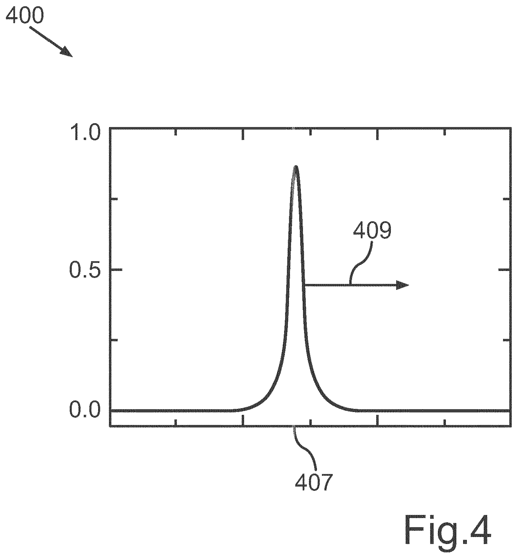

Der optische Abstandshalter 303 liegt hierbei direkt an den zwei dichroitischen Spiegeln 360, 365 des Fabry-Perot Resonators 305 an. Der optische Abstandshalter ist entsprechend dem Verfahren gemäß dem ersten Aspekt der Erfindung behandelt und verfügt daher über eine homogenisierte optische Dicke. Die tatsächliche geometrische Dicke ist, wie in Fig. 3 ersichtlich, möglicherweise nicht exakt homogen, was für die optische Dicke jedoch unerheblich ist. Zur Veränderung der Resonanzwellenlänge ist bei dieser Verwendung des optischen Abstandshalters eine Heizelektrode 370 an dem Fabry-Perot Resonator angeordnet, über die der optische Abstandshalter 303 homogen aufgeheizt werden kann. Die hierdurch verursachte Veränderung des Transmissionsspektrums des Fabry-Perot Resonators 305 ist in Fig. 4 beschrieben.

Zum Betreiben der Heizelektrode 370 ist diese auf einem Trägermaterial 372 angeordnet und mit einer einstellbaren Stromquelle 374 verbunden.

Das erfindungsgemäße Verfahren ermöglicht vorteilhaft besonders große Ausmaße des homogenisierten optischen Abstandshalters 303. So sorgt das Verfahren für eine besonders schnelle Homogenisierung, so dass auch in kommerziell sinnvollen Zeitspannen, beispielsweise in weniger als 20 Stunden, insbesondere in weniger als 5 Stunden, eine Homogenisierung des Abstandshalters 303 und mithin eine schmale Bandbreite des Fabry-Perot Resonators verwirklicht werden kann. Hierfür kann der optische Abstandshalter beispielsweise eine Querschnittsfläche senkrecht zur vorgesehenen optischen Achse von mindestens 100 mm², insbesondere von mindestens 200 mm², umfassen. Weiterhin kann der optische Abstandshalter 303 eine Dicke zwischen 1 µm und 50 µm aufweisen. Die Bandbreite des Fabry-Perot Resonators liegt dabei für eine einzelne Resonanzwellenlänge vorzugsweise im Bereich von 100 pm.

Fig. 4 zeigt ein Diagramm mit einem Transmissionsspektrum 400 eines Fabry-Perot Resonators mit einem homogenisierten optischen Abstandshalter gemäß einem zweiten**,** nicht erfindungsgemäßen, Aspekt.

Das Diagramm hat auf der x-Achse die Wellenlänge in nm aufgetragen und auf der y-Achse die Transmission skaliert von 0 bis 1 aufgetragen, wobei 1 eine ungefilterte Transmission und 0 ein vollständiges Herausfiltern des entsprechenden spektralen Anteils bedeutet.

Es ist im Transmissionsspektrum 400 zu erkennen, dass im dargestellten spektralen Bereich nur ein Licht mit einer sehr schmalen Bandbreite um die Resonanzwellenlänge 407 herum den Fabry-Perot Resonanter mit dem behandelten optischen Abstandshalter passieren kann. Vorzugsweise beträgt die Bandbreite weniger als 150 pm, insbesondere weniger als 100 pm. Hierdurch ist für viele mögliche Anwendungen, wie beispielsweise in der bildgebenden Spektroskopie und/oder in der kamerabasierten photoakustischen Bildgebung, eine besonders hohe spektrale Auflösung möglich.

Schließlich ist in Fig. 4 auch ein Pfeil 409 dargestellt, der die Verschiebung des dargestellten Spektrums bei wachsender Temperatur des optischen Abstandshalters darstellt. Dies stellt die Grundlage dafür dar, dass über eine Heizelektrode und ein entsprechendes homogenes Aufheizen des optischen Abstandshalters die spektralen Eigenschaften des über den optischen Abstandshalter realisierten optischen Filter besonders kontrolliert und reproduzierbar verstellt werden können.

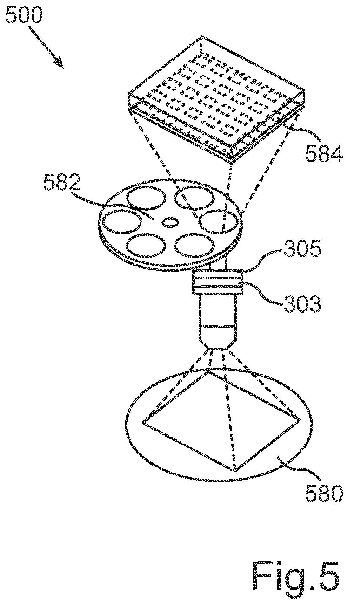

Fig. 5 zeigt eine schematische Darstellung eines nicht erfindungsgemäßen Ausführungsbeispiels einer Verwendung eines homogenisierten optischen Abstandshalters 303 gemäß einem vierten Aspekt in einer spektralen Kamera 500, insbesondere in einer Hyperspektralkamera.

In diesem Ausführungsbeispiel werden Wellenlängen in einem hyperspektralen Datensatz 580 erfasst, wobei die Strahlen durch ein mit dem Fabry-Perot Resonator 305 gemäß dem dritten Aspekt kombiniertes Filterrad 582 spektral gefiltert werden. Das Filterrad 582 bildet einen einstellbaren optischen Bandpassfilter und ist dabei so gewählt, dass die jeweilige Bandbreite einer Filterradeinstellung des Filterrades 582 kleiner ist als der freie Spektralbereich des Fabry-Perot Resonators 305. Hierdurch bildet die Kombination aus Fabry-Perot Resonator 305 und Filterrad 582 einen optischen Filter mit genau einer Resonanzwellenlänge. Diese Resonanzwellenlänge wird, wie weiter oben erläutert, aufgrund der Behandlung des optischen Abstandshalter 303 gemäß dem Verfahren gemäß dem ersten Aspekt der Erfindung, mit einer besonders geringen Bandbreite von weniger als 150 pm, vorzugsweise von weniger als 100 pm, erreicht.

Die Strahlen mit einer derart geringen Bandbreite erreichen daraufhin einen Bildgeber 584 der spektralen Kamera 500. Daher ist durch eine derartige Verwendung des homogenisierten optischen Abstandshalter 303 eine besonders hohe spektrale Auflösung der entsprechend bereitgestellten spektrale Kamera möglich.

Neben der beschriebenen Anwendung in der bildgebenden Spektroskopie kann der Fabry-Perot Resonator entsprechend dem dritten Aspekt auch im Rahmen einer kamerabasierten photoakustischen Bildgebung verwendet werden. Hierfür wird bekanntermaßen ein anderer Messaufbau verwendet. So kann beispielsweise der Fabry-Perot Resonator großflächig mit einem Laser bestrahlt werden und die Resonanzwellenlänge wird mittels Heizelektrode derart verschoben, dass der Punkt der größten Reflektionsänderung in der Resonator-Transferfunktion sich bei der Wellenlänge des Lasers befindet. Hierdurch führen Verformungen des homogenisierten optischen Abstandshalters durch akustische Wellen zu besonders großen Änderungen von durch den Fabry-Perot Resonator reflektiertem Laserlicht. Diese Änderung kann beispielsweise durch eine Kamera gemessen werden.

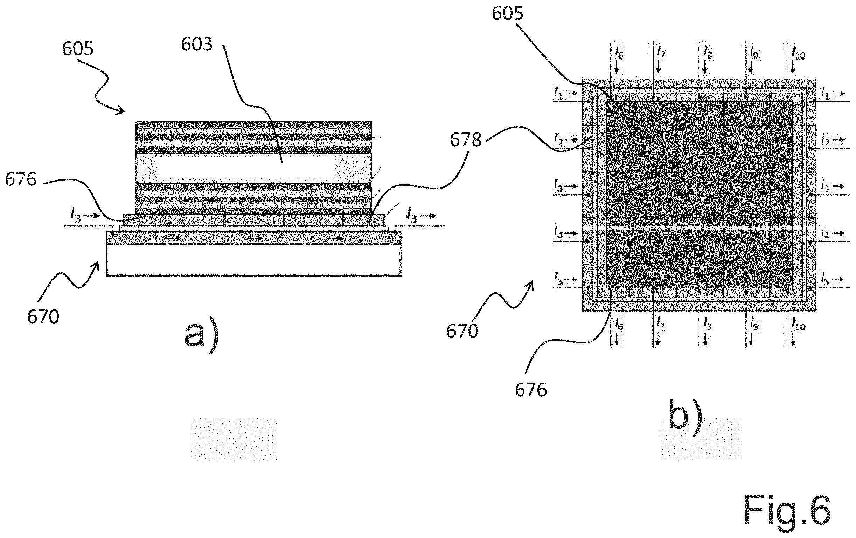

Die Figuren 6 a, b zeigen eine schematische Darstellung eines nicht erfindungsgemäßen Ausführungsbeispiels einer Heizelektrode 670 gemäß einem weiteren Aspekt in einer Seitenansicht (Fig. 6 a) und einer Draufsicht (Fig. 6 b). Die dargestellte Heizelektrode 670 verfügt über eine Vielzahl von zumindest teilweise verschieden bestromten Elektrodenstreifen 676. Zudem können die Elektrodenstreifen 676 jeweils separat angesteuert werden, was auch durch die teilweise verschiedenen dargestellten Ströme I1 bis I10 an den elektrischen Kontakten dargestellt ist.

Der jeweils dargestellte Fabry-Perot Resonator 605 entspricht im Wesentlichen den Fabry-Perot Resonatoren aus den vorhergehenden Ausführungsbeispielen. Insbesondere ist der Fabry-Perot Resonator 605 vorzugsweise mit einem optischen Abstandshalter 603 gemäß dem zweiten Aspekt ausgestattet, damit ein homogenes Aufheizen des Abstandshalters 603 auch zu einer im Wesentlichen homogenen Veränderung der optischen Eigenschaften, also insbesondere der Resonanzwellenlänge des Fabry-Perot Resonators 605 führt.

Vorzugsweise werden Elektrodenstreifen 676, die eine vergleichbare Lage relativ zu dem optischen Abstandshalter 603 aufweisen mit einem im Wesentlichen gleichen Strom betrieben. So werden beispielsweise die Elektrodenstreifen 676 bei den vier Ecken des quadratischen optischen Abstandshalters 603 im Wesentlichen mit der gleichen Stromstärke aufgeheizt.

In dem dargestellten Ausführungsbeispiel sind die Elektrodenstreifen 676 separat ansteuerbar, um das homogene Aufheizen zu gewährleisten. Hierdurch kann beispielsweise abhängig von einer angestrebten Dicke des optischen Abstandshalters 603 eine jeweils angelegte Stromstärke abhängig von dem Ort des jeweiligen Elektrodenstreifens 676 verändert werden. Beispielsweise können Elektrodenstreifen 676 im Randbereich der Heizelektrode 670 stärker aufgeheizt werden als Elektrodenstreifen 676 im zentralen Bereich der Heizelektrode 670. Hierdurch kann berücksichtigt werden, dass die Randbereiche konvektionsbedingt kühler bleiben als ein zentraler Bereich der Heizelektrode 670. Würden alle Bereiche der Heizelektrode ortsunabhängig die gleiche Temperatur haben, wäre mithin ein inhomogenes Aufwärmen der Resonatorstruktur die Folge.

Ein Isolator 678 zwischen Elektroden der Heizelektrode ist in dem vorliegenden Ausführungsbeispiel durch SiO2 gebildet.

### Bezugszeichenliste

- 100: Verfahren
- 110, 120, 130, 140, 150, 160: Schritte des Verfahrens
- 200: System
- 203, 303, 603: optischer Abstandshalter
- 205, 305, 605: Fabry-Perot Resonator
- 210: Prüflaser
- 212: Prüfstrahl
- 214, 234, 242: Polarisator
- 216, 236: Strahlaufweiter
- 218, 360, 365: dichroitischer Spiegel
- 220: Lambda/4-Plättchen
- 222, 244, 246: polarisierender Strahlteiler
- 224: Kamera
- 226: Detektionssignal
- 228: Computer
- 230: Behandlungslaser
- 232: Behandlungsstrahl
- 240: Strahlmodulator zur räumlichen Strahlmodulation
- 248: Absorber
- 370, 670: Heizelektrode
- 372: Trägermaterial
- 374: Stromquelle
- 400: Transmissionsspektrum
- 407: Resonanzwellenlänge
- 409: Pfeil
- 500: spektrale Kamera
- 580: hyperspektraler Datensatz
- 582: Filterrad bildet optischen Bandpassfilter
- 584: Bildgeber
- 676: Elektrodenstreifen
- 678: Isolator
- I1 bis I10: Stromstärke

## Patentansprüche

1. Verfahren (100) zur Behandlung eines optischen Abstandshalters (203) für einen Fabry-Perot Resonator (205), aufweisend die Schritte:
- Anordnen des optischen Abstandshalters (203), welcher zumindest teilweise aus einem Photopolymer besteht, in einem Fabry-Perot Resonator (205), so dass der Fabry-Perot Resonator (205) zwei durch den optischen Abstandshalter (203) voneinander getrennte dichroitische Spiegel (360, 365) umfasst;
- Anordnen des Fabry-Perot Resonators (205) in einem optischen System (200);
- Ausrichten eines Behandlungsstrahls (232) auf den Fabry-Perot Resonator (205), wobei der Behandlungsstrahl (232) Licht aus einem kurzwelligen Bereich aufweist, wobei das Licht aus dem kurzwelligen Bereich geeignet ist, eine Brechungsindexänderung des optischen Abstandshalters (203) zu verursachen;
- Ausrichten eines Prüfstrahls (212), insbesondere eines optisch aufgeweiteten Prüfstrahls, auf den Fabry-Perot Resonator (205); - Detektieren eines reflektierten oder transmittierten Anteils des auf den Fabry-Perot Resonator (205) ausgerichteten Prüfstrahls (212), wobei der reflektierte oder transmittierte Anteil ortsabhängige Resonanzwellenlängen des Fabry-Perot Resonators (205) indiziert; und
- Anpassen einer Bestrahlungsstärke des Behandlungsstrahls (232) basierend auf dem detektierten reflektierten oder transmittierten Anteil derart, dass durch die verursachte Brechungsindexänderung eine Varianz von indizierten ortsabhängigen Resonanzwellenlängen des Fabry-Perot Resonators (205) reduziert wird,
**dadurch gekennzeichnet, dass**
der Behandlungsstrahl (232) räumlich moduliert ist,
das Detektieren räumlich aufgelöst ist, und
das Anpassen einer Bestrahlungsstärke ein räumlich aufgelöstes Anpassen einer ortsabhängigen Bestrahlungsstärke ist.

2. Verfahren (100) gemäß Anspruch 1, wobei für das Anpassen der ortsabhängigen Bestrahlungsstärke eine kleinste indizierte Resonanzwellenlänge des Fabry-Perot Resonators (205) bestimmt wird und die ortsabhängige Bestrahlungsstärke derart gewählt wird, dass eine durch den räumlich modulierten Behandlungsstrahl (232) verursachte Brechungsindexänderung eine Reduzierung der jeweiligen ortsabhängigen Resonanzwellenlänge im Wesentlichen hin zu der kleinsten indizierten Resonanzwellenlänge verursacht.

3. Verfahren (100) gemäß Anspruch 1 oder 2, wobei der Behandlungsstrahl (232) Licht mit einer Wellenlänge von weniger als 450 nm, insbesondere von weniger als 420 nm aufweist.

4. Verfahren (100) gemäß mindestens einem der vorhergehenden Ansprüche, weiterhin aufweisend ein Anpassen einer Bestrahlungsdauer des räumlich modulierten Behandlungsstrahls (232) basierend auf dem detektierten reflektierten oder transmittierten Anteil.

5. Verfahren (100) gemäß mindestens einem der vorhergehenden Ansprüche, wobei der Fabry-Perot Resonator (205) gleichzeitig von dem Prüfstrahl (212) und dem Behandlungsstrahl (232) bestrahlt wird.

6. Verfahren (100) gemäß Anspruch 5, wobei die gleichzeitige Bestrahlung durch den Behandlungsstrahl (232) und den Prüfstrahl (212) über ein Einbringen eines dichroitischen Spiegels (218) in das optische System (200) ermöglicht wird.

7. Verfahren (100) gemäß mindestens einem der vorhergehenden Ansprüche, wobei das räumlich aufgelöste Detektieren des reflektierten oder transmittierten Anteils und das räumlich aufgelöste Anpassen der ortsabhängigen Bestrahlungsstärke automatisiert erfolgen.

8. Verfahren (100) gemäß mindestens einem der vorhergehenden Ansprüche, wobei das räumlich aufgelöste Detektieren des reflektierten oder transmittierten Anteils und das darauf basierende räumlich aufgelöste Anpassen der ortsabhängigen Bestrahlungsstärke so oft wiederholt werden, bis ein vorbestimmter Schwellenwert für die Varianz von indizierten ortabhängigen Resonanzwellenlängen des Fabry-Perot Resonators (205) zumindest in einem relevanten Behandlungsbereich des optischen Abstandshalters (203) erreicht wird.

## Claims

1. A method (100) for treating an optical spacer (203) for a Fabry-Perot resonator (205), comprising the steps of:
- arranging the optical spacer (203), which at least partially consists of a photopolymer, in a Fabry-Perot resonator (205) so that the Fabry-Perot resonator (205) comprises two dichroic mirrors (360, 365) separated from each other by the optical spacer (203);
- arranging the Fabry-Perot resonator (205) in an optical system (200);
- aligning a treatment beam (232) with the Fabry-Perot resonator (205), wherein the treatment beam (232) comprises light from a short-wavelength range, wherein the light from the short-wavelength range is suitable for causing a refractive index variation of the optical spacer (203);
- aligning a test beam (212), in particular an optically expanded test beam, with the Fabry-Perot resonator (205);
- detecting a reflected or transmitted portion of the test beam (212) aligned with the Fabry-Perot resonator (205), wherein the reflected or transmitted portion indexes location-dependent resonance wavelengths of the Fabry-Perot resonator (205); and
- adjusting an irradiance of the treatment beam (232) based on the detected reflected or transmitted portion such that a variance in indexed location-dependent resonance wavelengths of the Fabry-Perot resonator (205) is reduced by the refractive index variation (205) caused,
**characterized in that**
the treatment beam (232) is spatially modulated,
the detection is spatially resolved, and
the adjustment of an irradiance is a spatially resolved adjustment of a location-dependent irradiance.

2. The method (100) according to claim 1, wherein for adjusting the location-dependent irradiance, a smallest indexed resonance wavelength of the Fabry-Perot resonator (205) is determined and the location-dependent irradiance is selected such that a refractive index variation caused by the spatially modulated treatment beam (232) causes a reduction in the respective location-dependent resonance wavelength substantially toward the smallest indexed resonance wavelength.

3. The method (100) according to claim 1 or 2, wherein the treatment beam (232) comprises light with a wavelength of less than 450 nm, in particular less than 420 nm.

4. The method (100) according to at least one of the preceding claims, further comprising adjusting an irradiation duration of the spatially modulated treatment beam (232) based on the detected reflected or transmitted portion.

5. The method (100) according to at least one of the preceding claims, wherein the Fabry-Perot resonator (205) is simultaneously irradiated by the test beam (212) and the treatment beam (232).

6. The method (100) according to claim 5, wherein the simultaneous irradiation by the treatment beam (232) and the test beam (212) is enabled by introducing a dichroic mirror (218) into the optical system (200).

7. The method (100) according to at least one of the preceding claims, wherein the spatially resolved detection of the reflected or transmitted portion and the spatially resolved adjustment of the location-dependent irradiance are performed automatically.

8. The method (100) according to at least one of the preceding claims, wherein the spatially resolved detection of the reflected or transmitted portion and the spatially resolved adjustment of the location-dependent irradiance based thereon are repeated until a predetermined threshold value for the variance of indexed location-dependent resonance wavelengths of the Fabry-Perot resonator (205) is reached at least in a relevant treatment area of the optical spacer (203).

## Revendications

1. Procédé (100) de traitement d'un espaceur optique (203) destiné à un résonateur Fabry-Pérot (205), comprenant les étapes suivantes :
- agencer l'entretoise optique (203), constituée au moins en partie d'un photopolymère, dans un résonateur Fabry-Pérot (205), de telle sorte que ledit résonateur Fabry-Pérot (205) comprenne deux miroirs dichroïques (360, 365) séparés l'un de l'autre par ladite entretoise optique (203) ;
- agencer ledit résonateur Fabry-Pérot (205) dans un système optique (200) ;
- orienter un faisceau de traitement (232) vers ledit résonateur Fabry-Pérot (205), ce faisceau de traitement (232) comportant de la lumière dans une gamme de longueurs d'onde courtes, ladite lumière de gamme de longueurs d'onde courtes étant apte à provoquer une variation de l'indice de réfraction de ladite entretoise optique (203) ;
- orienter un faisceau de contrôle (212), en particulier d'un faisceau de contrôle optiquement élargi, vers ledit résonateur Fabry-Pérot (205) ;
- détecter une proportion réfléchie ou transmise dudit faisceau de contrôle (212) orienté vers ledit résonateur Fabry-Pérot (205), ladite proportion réfléchie ou transmise indiquant des longueurs d'onde de résonance dépendantes de la position dudit résonateur Fabry-Pérot (205) ; et
- ajuster l'intensité d'irradiation du faisceau de traitement (232) sur la base de la proportion réfléchie ou transmise détectée, de telle sorte que la variation des longueurs d'onde de résonance dépendantes de la position dudit résonateur Fabry-Pérot (205) soit réduite grâce à la modification de l'indice de réfraction ainsi provoquée,
**caractérisé en ce que**
ledit faisceau de traitement (232) est modulé spatialement,
la détection est à résolution spatiale, et
l'ajustement d'une intensité d'irradiation est un ajustement à résolution spatiale d'une intensité d'irradiation dépendante de la position.

2. Procédé (100) selon la revendication 1, dans lequel, pour ajuster l'intensité d'irradiation en fonction de la position, une longueur d'onde de résonance indiquée minimale dudit résonateur Fabry-Pérot (205) est déterminée et l'intensité d'irradiation dépendante de la position est choisie de telle sorte qu'une variation de l'indice de réfraction provoquée par ledit faisceau de traitement modulé spatialement (232) entraîne une réduction de la longueur d'onde de résonance dépendante de la position correspondante, essentiellement vers la longueur d'onde de résonance indiquée la plus petite.

3. Procédé (100) selon la revendication 1 ou 2, dans lequel ledit faisceau de traitement (232) comprend de la lumière d'une longueur d'onde inférieure à 450 nm, en particulier inférieure à 420 nm.

4. Procédé (100) selon au moins l'une des revendications précédentes, comprenant en outre l'ajustement d'une durée d'irradiation dudit faisceau de traitement modulé spatialement (232) sur la base de la proportion réfléchie ou transmise détectée.

5. Procédé (100) selon au moins l'une des revendications précédentes, dans lequel le résonateur Fabry-Pérot (205) est irradié simultanément par ledit faisceau de contrôle (212) et ledit faisceau de traitement (232).

6. Procédé (100) selon la revendication 5, dans lequel l'irradiation simultanée par ledit faisceau de traitement (232) et ledit faisceau de contrôle (212) est rendue possible par l'introduction d'un miroir dichroïque (218) dans le système optique (200).

7. Procédé (100) selon au moins l'une des revendications précédentes, dans lequel la détection à résolution spatiale de la proportion réfléchie ou transmise et l'ajustement à résolution spatiale de l'intensité d'irradiation en fonction de la position s'effectuent de manière automatisée.

8. Procédé (100) selon au moins l'une des revendications précédentes, dans lequel la détection à résolution spatiale de la proportion réfléchie ou transmise et l'ajustement à résolution spatiale de l'intensité d'irradiation en fonction de la position qui en découle sont répétées jusqu'à ce qu'une valeur seuil prédéterminée pour la variance des longueurs d'onde de résonance dépendantes de la position et indiquées dudit résonateur Fabry-Pérot (205) soit atteinte au moins dans une zone de traitement pertinente de ladite entretoise optique (203).
